# EUROPÄISCHE PATENTSCHRIFT

(11) **EP 0 694 137 B1**
(45) Veröffentlichungstag und Bekanntmachung des Hinweises auf die Patenterteilung: **22.10.1997**
(21) Anmeldenummer: 94914392.9
(22) Anmeldetag: 18.04.1994
(51) Int. Cl.: F16H 61/00

(54) **SCHALTVORRICHTUNG FÜR EIN STUFENLOSES GETRIEBE EINES KRAFTFAHRZEUGES**
SHIFTING DEVICE FOR A MOTOR VEHICLE CONTINUOUSLY VARIABLE TRANSMISSION
DISPOSITIF DE CHANGEMENT DE VITESSES POUR UNE TRANSMISSION A VARIATION CONTINUE D'UN VEHICULE AUTOMOBILE

(30) Priorität: 20.04.1993 DE 4312718
(43) Veröffentlichungstag der Anmeldung: 31.01.1996
(73) Patentinhaber: ZF FRIEDRICHSHAFEN Aktiengesellschaft, 88038 Friedrichshafen (DE)
(72) Erfinder: RUNGE, Wolfgang, D-88214 Ravensburg (DE); FREI, Walter, D-88045 Friedrichshafen (DE); WELTE, Anton, D-88048 Friedrichshafen (DE)
(86) Internationale Anmeldenummer: EP9401188
(87) Internationale Veröffentlichungsnummer: WO9424463

(56) Entgegenhaltungen:
- EP-A- 0 232 686
- EP-A- 0 305 156
- EP-A- 0 574 968
- DE-A- 3 932 720
- DE-C- 4 120 540

## Beschreibung

Die Erfindung bezieht sich auf eine Schaltvorrichtung für ein stufenloses Getriebe eines Kraftfahrzeuges, bei der durch ein elektronisches Steuergerät die Übersetzung des Getriebes in einer Betriebsart über Signale einer als manuell betätigbares Bedienungsorgan ausgebildeten Stelleinrichtung in Abhängigkeit von Betriebsparametern des Kraftfahrzeuges selbsttätig gewählt und eingestellt wird und in einer weiteren Betriebsart ein manueller Eingriff über eine stufenlose oder inkrementale Betätigung der Stelleinrichtung möglich ist.

Aus der DE-A-39 32 720 ist eine Stelleinrichtung bekanntgeworden. Diese weist einen Wählhebel auf, mit dem ein Fahrbereich eingeschränkt werden kann. Bei der bekannten Vorrichtung wird die Übersetzung oder die Motordrehzahl nach unten begrenzt. Ein Nachteil der vorbekannten Anordnung besteht darin, daß die Möglichkeit einer Einflußnahme durch den Fahrer durch die vorgegebenen Bereichsgrenzen stark eingeschränkt ist. Diesem Stand der Technik ist ferner nicht zu entnehmen, wie eine Verknüpfung mehrerer Betriebsparameter möglich sein sollte.

Eine Schaltvorrichtung nach dem Oberbegriff des Anspruchs 1 der eingangs genannten Art ist aus der DE-C-41 20 540 bekannt geworden. In einer ersten Betriebsart können vom Fahrer Kennlinien gewählt werden. In einer zweiten Betriebsart wird ein vom Fahrer direkt beeinflußbares Stufengetriebe nachgebildet. Um die Bedienung in dieser Betriebsart zu ermöglichen, werden dem Fahrer nur einige voreingestellte Übersetzungen zur Verfügung gestellt.

Der vorliegenden Erfindung liegt die Aufgabe zugrunde, eine Schaltvorrichtung für ein stufenloses Getriebe eines Kraftfahrzeuges zu schaffen, mit der durch einen manuellen Eingriff die Beeinflussung eines Fahrbereichs-Kennfeldes möglich ist.

Diese Aufgabe wird mit einem, auch die kennzeichnenden Merkmale des Hauptanspruches aufweisenden gattungsgemäßen Schaltvorrichtung für ein stufenloses Getriebe gelöst.

Zwar ist es aus der EP-A-0 232 686 bekannt geworden, ein manuelles Betätigungsorgan in Form eines Potentiometers vorzusehen, womit eine Kennfeldänderung vorgenommen werden kann. Dieses Einstellelement ist jedoch nicht identisch mit dem Organ, über das das Steuergerät des Getriebes in der automatischen Betriebsart mit Signalen versehen wird.

Es ist besonders vorteilhaft, die Betriebsparameter zur Beeinflussung des Arbeitspunktes aus der Kombination der Motordrehzahl und der Übersetzung oder aus der Kombination der Motordrehzahl mit der Abtriebsdrehzahl oder aus der Verknüpfung aller 3 Größen zu bilden. Wenn man nämlich diese beiden Größen miteinander verknüpft, ergibt sich in Verbindung mit einem manuellen Eingriff ein ausgezeichnetes Fahrverhalten, insbesondere in bergigem Gelände. Bei Bergauffahrt werden unerwünschte Pendelschaltungen verhindert, während bei Bergabfahrt die Bremswirkung des Motors voll ausgenutzt werden kann.

Mit der Verknüpfung der Abtriebsdrehzahl kann zusätzlich in einem gewissen Bereich bedarfsweise eine gewünschte Fahrgeschwindigkeit zusätzlich eingehalten werden.

Bei einer Schaltvorrichtung, wie sie bei Automatik-Getrieben üblicherweise eingesetzt wird, ist eine Stelleinrichtung vorgesehen, durch deren Verschwenken in einer Schaltgasse die automatischen Übersetzungsstufen vorwählbar sind. Ferner kann die Stelleinrichtung über eine Quergasse in eine zweite Schaltgasse überführt werden. Bei einer weiteren Lösung der gestellten Aufgabe sind mit der Stelleinrichtung durch Verschwenken in der zweiten Schaltgasse die Grenzen eines Kennfeldes durch die Kombination der Motordrehzahl und der Übersetzung veränderbar.

Durch Verschwenken der Stelleinrichtung in der zweiten Schaltgasse werden analoge oder digitale Ausgangssignale erzeugt, die an das elektronische Steuergerät weitergeleitet werden. Diese Ausgangssignale bewirken bei einer bevorzugten Ausführungsvariante eine wertemäßig gleichbleibende (absolute) Änderung mindestens eines Betriebsparameters, z. B. der Motordrehzahl oder der Übersetzung. Im Gegensatz zu bekannten Schaltvorrichtungen (z. B. DE-A-41 20 540) ist diese Änderung keine Funktion des Arbeitspunktes (und damit mehr oder weniger groß), sondern immer gleichbleibend. Daher ist das Resultat eines Schaltvorganges für den Fahrer immer vorhersehbar. Die manuell bewirkte Änderung kann auch durch eine zeitabhängige Funktion herbeigeführt werden. Die Änderung ist dann primär eine Funktion der Betätigungsdauer. Auch dann ist das Ergebnis einer manuellen Betätigung für den Fahrer ohne weiteres vorhersehbar.

Bei einem weiteren, bevorzugten Ausführungsbeispiel werden die analogen und/oder digitalen Signale durch das elektronische Steuergerät zu einem Ausgangssignal verknüpft, das zumindest die Betriebsparameter Motordrehzahl und Übersetzung berücksichtigt. Auf diese Weise ist gewährleistet, daß über ein digitales oder analoges Signal in Plus- oder Minus-Richtung trotzdem eine Verknüpfung mehrerer Betriebsparameter zu einem Stellsignal für die Stelleinrichtung des stufenlosen Getriebes vorgenommen werden kann.

Um eine Tempomat-Funktion zu erzielen, ist es vorteilhaft, eine konstante Abtriebsdrehzahl des Getriebes bei sich verändernder Motordrehzahl stufenlos oder in Inkrementen zusätzlich einzustellen.

Ein besonders günstiges Fahrverhalten wird durch die Verknüpfung zweier Betriebsparameter dadurch erzielt, daß, abhängig von der Dauer bzw. - bei inkrementeller Betätigung - der Veränderung der Impulse zunächst eine vergleichweise große Veränderung der Motordrehzahl vorgenommen wird, während die Begrenzung der Übersetzung vergleichsweise gering gehalten wird. Bei länger anhaltender Betätigung bzw. steigender Anzahl von Impulsen sollte die Motordrehzahl weniger stark verändert werden, während die Übersetzung mit stark steigender Tendenz verstellt werden sollte. Aus den aufgezeigten Tendenzen läßt sich ein Differenzsignal gewinnen, das ein sehr gutes subjektives Fahrempfinden, insbesondere in bergigem Gelände, vermittelt.

Weitere, für die Erfindung wesentliche Merkmale sowie die hieraus resultierenden Vorteile sind der nachfolgenden Beschreibung mehrerer Ausführungsbeispiele zu entnehmen. Es zeigen:
- Fig. 1: eine vereinfachte graphische Darstellung einer Fahrbereichsbeeinflussung;
- Fig. 2: eine Darstellung einer Kennlinie einer Begrenzung der Motordrehzahl in Abhängigkeit einer Anzahl von Impulsen;
- Fig. 3: die Darstellung einer Kennlinie der Begrenzung der Übersetzung in Abhängigkeit einer Anzahl von Impulsen;
- Fig. 4 bis Fig. 6: schematische Darstellungen einer Stelleinrichtung für ein automatisches, stufenloses Getriebe mit zwei Schaltgassen und einem elektronischen Steuergerät.

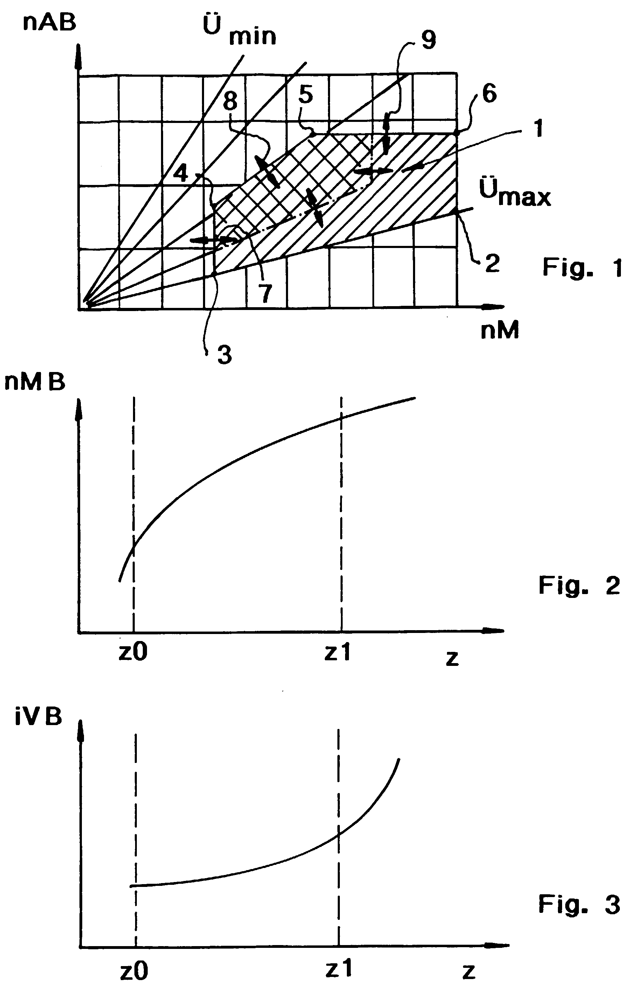

In Fig. 1 ist in einem Diagramm über der Motordrehzahl nM (X-Achse) die Abtriebsdrehzahl n_{AB} (Y-Achse) eines stufenlosen Getriebes aufgetragen. Der Übersetzungsbereich des stufenlosen Getriebes liegt zwischen den strahlenförmig verlaufenden Linien Üₘᵢₙ (längste Übersetzung, d. h. größte Abtriebsdrehzahl n_{AB}) und Üₘₐₓ (kürzeste Übersetzung im Bereich kleiner Abtriebsdrehzahlen n_{AB}.

Zwischen den Linien Üₘᵢₙ und Üₘₐₓ liegt der gesamte Übersetzungsbereich des stufenlosen Getriebes für normale Vorwärtsfahrt. Variierende Übersetzungen sind durch das zusätzlich eingezeichnete Strahlenbündel angedeutet.

In der Darstellung ist ein Kennfeld 1 durch die schraffierte Fläche besonders hervorgehoben. Innerhalb dieses Kennfeldes 1 liegt der Arbeitspunkt der Motor-Getriebekombination. Der Arbeitspunkt ist manuell oder in In- bzw. Dekrementen im gesamten Kennfeld 1 einstellbar. Das Kennfeld 1 hat die Form eines Fünf-Ecks und wird durch folgende Begrenzungslinien definiert:
Einer Begrenzungslinie 2-3, mit der eine große Übersetzung definiert wird (im vorliegenden Ausführungsbeispiel entspricht diese Übersetzung der größten Übersetzung Üₘₐₓ des stufenlosen Getriebes),
einer Begrenzungslinie 3-4, die beispielsweise vertikal gerichtet verlaufen kann und die eine bestimmte Untergrenze der Motordrehzahlen nM definiert,
einer Begrenzungslinie 4-5, mit der eine kleine Übersetzung begrenzt wird und schließlich
einer Begrenzungslinie 5-6, mit der eine Abtriebsdrehzahl n_{AB} bzw. mittelbar eine Geschwindigkeit festgelegt wird.

Mit den Doppelpfeilen 7 (Begrenzungslinie 3-4), 8 (Begrenzungslinie 4-5) und 9 (Begrenzungslinie 5-6) ist kenntlich gemacht, daß ein Ziel der vorliegenden Erfindung darin besteht, die Lage dieser Begrenzungslinien zur einen oder anderen Seite hin zu verändern. Hierbei definieren die nach innen - bezogen auf die schraffierte Fläche - gerichteten Pfeile eine Plus-Richtung, während die nach außen gerichteten Pfeile die Minus-Richtung wiedergeben.

Wird die Begrenzungslinie 3-4 in Plus-Richtung verschoben, erfolgt eine Verlagerung der unteren Begrenzung der Motordrehzahlen nM nach oben in Richtung auf höhere Absolut-Werte. Eine Verlagerung der Begrenzungslinie 3-4 in Minus-Richtung bewirkt, daß die Motordrehzahl nM demgegenüber bei niedrigeren Absolut-Werten nach unten begrenzt wird.

Wenn die Begrenzungslinie 4-5 in Plus-Richtung verschoben wird, wird die Untergrenze der erreichbaren Minimal-Übersetzungen in Richtung Üₘₐₓ verschoben. Die erreichbaren Abtriebsdrehzahlen n_{AB} werden, mit anderen Worten ausgedrückt, geringer. Eine Verlagerung in Minus-Richtung bewirkt, daß die erzielbare Übersetzung in Richtung Üₘᵢₙ verlagert wird, d. h., die erreichbaren Abtriebsdrehzahlen n_{AB} werden mit steigender Motordrehzahl Nm größer.

Bei Verlagerung der Begrenzungslinie 5-6 in Plus-Richtung wird eine erreichbare Abtriebsdrehzahl n_{AB} in Richtung "Kleiner-Werden" begrenzt, während eine Verschiebung in Minus-Richtung die erreichbare Abtriebsdrehzahl n_{AB} erhöht. Neben der ihr primär zugedachten Funktion, eine bestimmte Abtriebsdrehzahl n_{AB} nach oben hin zu begrenzen, ist es möglich, diese Begrenzungslinie 5-6 als Sollwert-Vorgabe aufzufassen, so daß das Kraftfahrzeug über das stufenlose Getriebe mit einer wählbaren konstanten Abtriebsdrehzahl n_{AB} angetrieben wird (Tempomat-Funktion).

Es ist vorteilhaft, die Verschiebung der Begrenzungslinien 3-4 bzw. 4-5 bzw. 5-6 in Inkrementen bzw. Dekrementen und/oder durch analoge Größen stufenlos vorzunehmen. Hierbei kann es vorteilhaft sein, wenn die entsprechenden Verstelldrehzahlen entlang der Kurve des günstigsten Kraftstoffverbrauchs im Motorkennfeld in In- bzw. Dekrementen erfolgt. Dann ist nur eine Größe unabhängig vorgebbar. Die Veränderung mindestens eines Betriebsparameters durch einen manuellen Eingriff kann auch zeitabhängig erfolgen. Die Änderung ist dann von der Betätigungsdauer abhängig.

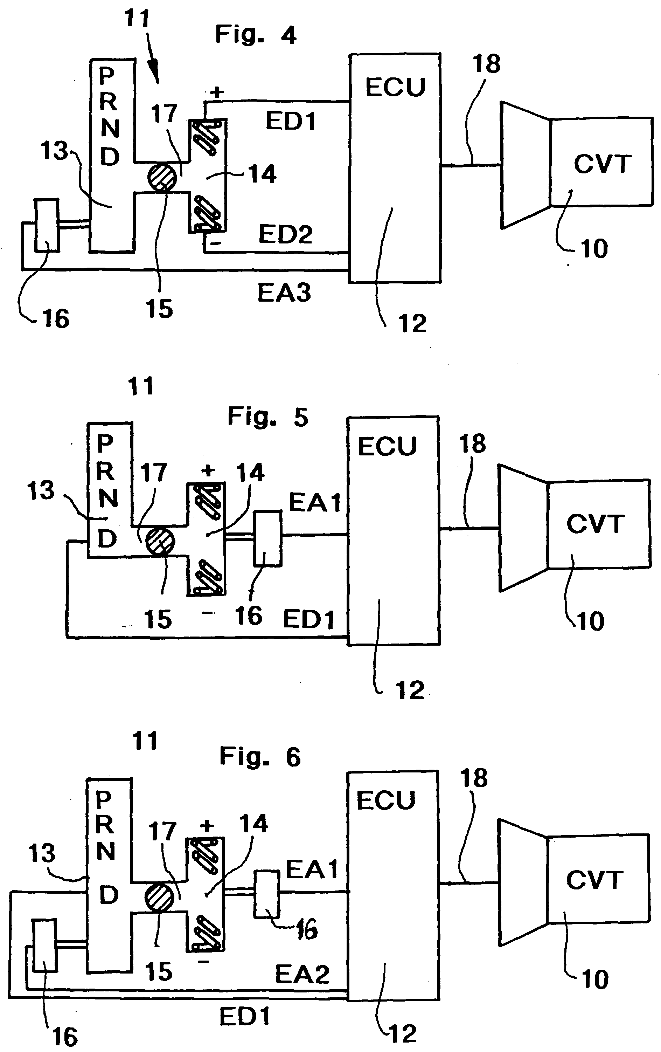

Das stufenlose Getriebe 10 wird von der Schaltvorrichtung 11 über ein elektronisches Steuergerät 12 (vgl. Fig. 4) angesteuert.

Besonders vorteilhaft ist es, wenn nicht nur einzelne Betriebsparameter, wie die Motordrehzahl nM, die Übersetzung Ü oder die Abtriebsdrehzahl n_{AB}, schrittweise oder stufenlos im Sinne einer Veränderung des Kennfeldes entsprechend Fig. 1 beeinflußt werden. Besonders vorteilhaft ist zumindest eine Verknüpfung der Betriebsparameter der Motordrehzahl nM mit der Übersetzung Ü des stufenlosen Getriebes 10. Eine derartige Verknüpfung dieser beiden Betriebsparameter erfolgt im elektronischen Steuergerät 12 in der Weise, daß zumindest zwei Kennlinien miteinander in Verbindung gebracht werden. Wie dies geschehen kann, zeigen die Diagramme entsprechend den Fig. 2 und 3, die die tendenzielle Verstellstrategie verdeutlichen.

In Fig. 2 ist über der Anzahl von Verstellimpulsen Z oder der Dauer einer Betätigung die Veränderung der Motordrehzahl, die mit nMB bezeichnet ist, aufgetragen. Bei Betätigung einer Stelleinrichtung 15 in Plus-Richtung erfolgt bereits bei einer relativ kleinen Anzahl von Impulsen Z eine markante Verschiebung der Begrenzungslinie 3-4 ebenfalls in Plus-Richtung. Mit zunehmender Anzahl von Impulsen Z zeigt die Kennlinie eine abnehmende Tendenz zur Veränderung der Motordrehzahl nM. Die Untergrenze der Motordrehzahl nM wird demzufolge weniger stark angehoben.

Umgekehrt hierzu verhält sich die Verstellung der Übersetzung des stufenlosen Getriebes. Zunächst wird die Übersetzung relativ schwach steigend in Richtung Üₘₐₓ verändert, während mit zunehmender Impulsfolge eine überproportional ansteigende Verlagerung der Übersetzung in Richtung Maximal-Übersetzung des stufenlosen Getriebes einsetzt. Es ist vorteilhaft, zumindest die Betriebsparameter Motordrehzahl nM und Übersetzung Ü über das elektronische Steuergerät 12 miteinander in Verbindung zu setzen. Besonders vorteilhaft hat sich eine Verknüpfung erwiesen, bei der kein linearer Zusammenhang besteht, sondern bei der eine unterschiedliche Wichtung einzelner Betriebsparameter erfolgt, wie dies anhand der Kennlinien entsprechend den Fig. 2 und 3 erläutert wurde.

Neben den beschriebenen Verknüpfungen kann im elektronischen Steuergerät 12 eine zusätzliche Beziehung zur Abtriebsdrehzahl n_{AB} bzw. zur Fahrgeschwindigkeit herbeigeführt werden. Bei einer möglichen Betriebsart wird lediglich die Abtriebsdrehzahl n_{AB} vorgegeben und auf einem konstanten Wert gehalten. Diese Betriebsart ist mit der unter der Bezeichnung Tempomat bekannten Wirkungsweise eines Stufengetriebes vergleichbar.

In Fig. 4 ist der grundsätzliche Aufbau einer erfindungsgemäßen Schaltvorrichtung in schematischer, stark vereinfachter Darstellung wiedergegeben. Die Schaltvorrichtung 11 weist zwei Schaltgassen 13 und 14 auf. In der Schaltgasse 13 wird über eine Stelleinrichtung 15 eine der Wählstellungen P, R, N, D vorgewählt. Im unteren Bereich der Schaltgasse 13 kann über die Stelleinrichtung 15 ein analoges Ausgangssignal EA3 erzeugt werden. Hierzu könnte die Stelleinrichtung 15 beispielsweise mit einem Potentiometer 16 verbunden sein. Über eine Quergasse 17 kann die Schaltgasse 13 verlassen werden. Die Stelleinrichtung 15 taucht dann in eine zweite Schaltgasse 14 ein. Durch Verschwenken der Stelleinrichtung 15 kann durch Kontaktgabe mit einem in der Zeichnung oben liegenden Sensor ein Plus-Signal und in der in der Zeichnung unten liegenden Stellung ein Minus-Signal erzeugt werden. Hierbei kann es sich um digitale Ausgangssignale ED1 und ED2 handeln. Die Stelleinrichtung 15 wird in der Schaltgasse 14 in einer federbelasteten Mittellage gehalten.

Ein ein- oder mehrmaliges Schließen des oberen bzw. unteren Sensors erzeugt mindestens einen Impuls in Plus- bzw. in Minus-Richtung. Auf das Diagramm nach Fig. 1 übertragen bedeutet dies eine Einengung des Kennfeldes 1 in Plus-Richtung bzw. eine Ausweitung des Kennfeldes 1 in umgekehrter Richtung.

Die digitalen Signale ED1 und ED2 und das analoge Signal EA3 liegen an einem elektronischen Steuergerät 12 (ECU) an. Vom elektronischen Steuergerät 12 führt mindestens eine Signalleitung 18 zum stufenlosen Getriebe 10 (CVT). An diese Signalleitung könnte auch das Steuergerät für den Motoreingriff angeschlossen sein.

Bei dem digitalen Eingangssignal ED1 kann es sich grundsätzlich um ein Plus-Signal handeln, welches innerhalb des elektronischen Steuergeräts 12 zusätzlich verändert werden kann, um als Plus-Signal über die Signalleitung 18 an die Stellvorrichtung des stufenlosen Getriebes 10 weitergeleitet zu werden. Gleiches gilt für das digitale Eingangssignal ED2. Eine Aufbereitung der Eingangssignale könnte, wie erläutert, durch die Verknüpfung zweier Kennlinien erfolgen. Das über die Signalleitung 18 weitergeführte Stellsignal entspricht dann einem Differenzsignal.

Bei der Anordnung nach Fig. 5 erzeugt die Stelleinrichtung 15, sofern sie in der Schaltgasse 14 bewegt wird, ein analoges Ausgangssignal EA1. Die Signale für die automatisch zu schaltende Übersetzung liegen als digitales Eingangssignal ED1 am elektronischen Steuergerät 12 an.

Bei dem Ausführungsbeispiel entsprechend Fig. 6 handelt es sich prinzipiell um eine Kombination der Ausführungsbeispiele nach den Fig. 4 und 5. Die automatisch zu schaltenden Übersetzungen werden digital dem elektronischen Steuergerät 12 zugeleitet. Für die stufenlose Wahl einzelner Fahrbereiche ist das Potentiometer 16 vorgesehen. Dieses erzeugt ein analoges Eingangssignal EA2.

Sämtlichen Ausführungsbeispielen gemeinsam ist der Umstand, daß durch Betätigen der Stelleinrichtung 15 innerhalb der zweiten Schaltgasse 14 entweder digitale oder analoge Signale in Plus- oder Minus-Richtung erzeugt werden. Durch diese Signale können einzelne Betriebsparameter, wie beispielsweise die Motordrehzahl, die Übersetzung oder die Abtriebsdrehzahl, des stufenlosen Getriebes 10 verändert werden. Damit in der zweiten Schaltgasse 14 ein Kennfeld modifiziert werden kann, wird ein Plus- oder ein Minus-Signal erzeugt, das im elektronischen Steuergerät eine zusätzliche Aufbereitung erfahren kann. Für das Befahren von bergigem Gelände hat es sich als besonders günstig erwiesen, die Betriebsparameter Motordrehzahl nM und ÜbersetzungÜ miteinander zu verknüpfen. Eine Eingrenzung des Kennfeldes in Plus-Richtung verhindert bei Bergauffahrt unerwünschte Pendelschaltungen, während bei Bergabfahrt die Bremswirkung des Motors voll ausgenutzt werden kann. Bei Fahrten in der Ebene hat es sich als günstig erwiesen, über die stufenlose Verstellmöglichkeit mit Hilfe des Potentiometers 16 eine bestimmte Fahrgeschwindigkeit anzuwählen, die dann durch Veränderung der Übersetzung auf einem konstanten Niveau gehalten wird.

Das in Fig. 1 eingezeichnete Kennfeld 1, das einem Arbeitsbereich des stufenlos verstellbaren Getriebes entspricht, läßt sich durch die Beeinflussung einer unteren Motordrehzahl, einer unteren Übersetzung und einer Abtriebsdrehzahl des Getriebes variieren. Innerhalb dieses Kennfeldes ist durch strichpunktierte Linien und durch die eingezeichnete Doppelschraffur eine weitere Abwandlung der erfindungsgemäßen Schaltvorrichtung angedeutet. Bei dieser möglichen Abwandlung wird auch die Obergrenze der Übersetzung und der Motordrehzahl zusätzlich mitbeeinflußt, was durch die eingezeichneten Doppelpfeile verdeutlicht wird.

In der einfachsten Ausführungsform wird das Kennfeld durch die Veränderung lediglich eines Betriebsparameters, z. B. einer unteren Motordrehzahl, verändert. Zu diesem Betriebsparameter kann die Verstellung einer unteren Übersetzung hinzutreten. Schließlich ist die Kombination der Betriebsparameter, der Motordrehzahl, der Übersetzung und der Abtriebsdrehzahl möglich. Wie durch das mit Doppelschraffur hervorgehobene Kennfeld sind weitere Abwandlungen dahingehend möglich, daß beispielsweise eine Obergrenze der Übersetzung und/oder eine Obergrenze der Motordrehzahl zusätzlich eingestellt werden kann.

Ein besonderer Vorteil der vorstehend erläuterten Anordnungen ist insbesondere in einer Verbesserung des subjektiven Fahrempfindens (Driveability) durch die manuelle Wahlmöglichkeit, insbesondere einer unteren Motordrehzahl in Verbindung mit der gezielten Beeinflussung des Übersetzungsverhältnisses, zu beobachten.

### Bezugszeichen

- 1: Kennfeld
- 2-3: Begrenzungslinie
- 3-4: Begrenzungslinie
- 4-5: Begrenzungslinie
- 5-6: Begrenzungslinie
- 7: Doppelpfeil
- 8: Doppelpfeil
- 9: Doppelpfeil
- 10: stufenloses Getriebe
- 11: Schaltvorrichtung
- 12: elektronisches Steuergerät
- 13: Schaltgasse
- 14: Schaltgasse
- 15: Stelleinrichtung
- 16: Potentiometer
- 17: Quergasse
- 18: Signalleitung

## Patentansprüche

1. Schaltvorrichtung (11) für ein stufenloses Getriebe (10) eines Kraftfahrzeuges, bei der durch ein elektronisches Steuergerät (12) die Übersetzung des Getriebes (10) in einer Betriebsart über Signale einer als manuell betätigbares Bedienungsorgan ausgebildeten Stelleinrichtung (15) in Abhängigkeit von Betriebsparametern des Kraftfahrzeuges selbsttätig gewählt und eingestellt wird und in einer weiteren Betriebsart ein manueller Eingriff über eine stufenlose oder inkrementale Betätigung der Stelleinrichtung (15) möglich ist, dadurch **gekennzeichnet**, daß in der weiteren Betriebsart ein Kennfeld (1) durch eine stufenlose oder in In- bzw. Dekrementen erfolgende Änderung einzelner Betriebsparameter oder einer Kombination mindestens zweier Betriebsparameter durch obengenannten manuellen Eingriff beeinflußt werden kann, wobei die Betriebsparameter aus der Motordrehzahl (nM), der Übersetzung (Ü) und der Abtriebsdrehzahl (n_{AB}) bestehen.

2. Schaltvorrichtung nach Anspruch 1, dadurch **gekennzeichnet**, daß die Betriebsparameter zur Beeinflussung des Kennfeldes (1) aus der Kombination der Motordrehzahl (nM) und der Übersetzung (Ü) bestehen.

3. Schaltvorrichtung nach Anspruch 1, dadurch **gekennzeichnet**, daß die Betriebsparameter aus Kombination der Motordrehzahl (nM), der Übersetzung (Ü) und der Abtriebsdrehzahl (n_{AB}) bestehen.

4. Schaltvorrichtung nach den Ansprüchen 1 bis 3, dadurch **gekennzeichnet**, daß die Veränderung von Betriebsparametern inkremental oder stufenlos analog oder zeitabhängig nach einer Übergangsfunktion erfolgt.

5. Schaltvorrichtung nach Anspruch 1, dadurch **gekennzeichnet**, daß ein Verschwenken der Stelleinrichtung (15) in der zweiten Schaltgasse (14) analoge oder digitale Signale für das elektronische Steuergerät (12) liefert.

6. Schaltvorrichtung nach Anspruch 5, dadurch **gekennzeichnet**, daß die analogen und/oder digitalen Signale durch das elektronische Steuergerät (12) zu einem Ausgangssignal verknüpft werden, das zumindest die Betriebsparameter Motordrehzahl (nM) und Übersetzung (Ü) berücksichtigt.

7. Schaltvorrichtung nach den Ansprüchen 1 bis 3, dadurch **gekennzeichnet**, daß bei einem manuellen Eingriff ein Arbeitspunkt in Inkrementen oder stufenlos im gesamten Kennfeld (1) einstellbar ist.

8. Schaltvorrichtung nach Anspruch 1, dadurch **gekennzeichnet**, daß eine konstante Abtriebsdrehzahl (n_{AB}) des Getriebes bei sich ändernder Motordrehzahl (nM) stufenlos oder in Inkrementen zusätzlich manuell veränderbar ist.

9. Schaltvorrichtung nach Anspruch 1, dadurch **gekennzeichnet**, daß, abhängig von der Dauer bzw. bei inkrementeller Betätigung der Anzahl der Impulse (Z), zunächst eine vergleichsweise große Veränderung der Motordrehzahl vorgenommen wird, während die Verstellung der Übersetzung vergleichsweise gering ist, während bei länger anhaltender Betätigung bzw. steigender Anzahl von Impulsen die Veränderung der Motordrehzahl abnimmt, während die Verstellung der Übersetzung mit stark steigender Tendenz zunimmt.

## Claims

1. Shifting device (11) for an infinitely variable speed transmission (10) of a motor vehicle, in which by means of an electronic control unit (12) the ratio of the transmission (10) in one operating mode is automatically selected and adjusted via signals of an actuating device (15) in the form of a manually actuable operating element in dependence upon operating parameters of the motor vehicle and in a further operating mode a manual intervention is possible by means of a stepless or incremental operation of the actuating device (15), characterized in that in the further operating mode a characteristic map (1) may be influenced by a stepless or incremental and/or decremental change of individual operating parameters or of a combination of at least two operating parameters by means of the manual intervention described above, the operating parameters comprising the engine speed (nM), the transmission ratio (Ü) and the output speed (n_{AB}).

2. Shifting device according to claim 2, characterized in that the operating parameters for influencing the characteristic map (1) comprise the combination of the engine speed (nM) and the transmission ratio (Ü).

3. Shifting device according to claim 1, characterized in that the operating parameters comprise a combination of the engine speed (nM), the transmission ratio (Ü) and the output speed (n_{AB}).

4. Shifting device according to claims 1 to 3, characterized in that the variation of operating parameters is effected in a manner which is incremental or steplessly analogue or time-dependent in accordance with a transfer function.

5. Shifting device according to claim 1, characterized in that a swivelling of the actuating device (15) in the second shifting alley (14) supplies analogue or digital signals for the electronic control unit (12).

6. Shifting device according to claim 5, characterized in that the analogue and/or digital signals are combined by the electronic control unit (12) into an output signal which takes into account at least the operating parameters of engine speed (nM) and transmission ratio (Ü).

7. Shifting device according to claims 1 to 3, characterized in that in the case of a manual intervention a working point is adjustable in increments or steplessly in the entire characteristic map (1).

8. Shifting device according to claim 1, characterized in that a constant output speed (n_{AB}) of the transmission with a changing engine speed (nM) is in addition manually variable steplessly or in increments.

9. Shifting device according to claim 1, characterized in that in dependence upon the duration and/or - in the case of incremental operation - the number of pulses (Z) initially a comparatively large variation of the engine speed is effected while the adjustment of the transmission ratio is comparatively slight, whereas given more sustained operation and/or an increasing number of pulses the variation of the engine speed decreases while the adjustment of the transmission ratio increases with a strongly upward trend.

## Revendications

1. Dispositif de commande (11) pour une boîte de vitesses à variation continue, pour un véhicule à moteur, dans laquelle la démultiplication de l'entraînement (10) est sélectionnée et engagée automatiquement au moyen d'un appareil de commande électronique (12) par des signaux générés par une installation de positionnement (15) actionnée manuellement en fonction de paramètres de fonctionnement du véhicule à moteur, ceci dans un premier mode de fonctionnement, et, dans laquelle, un enclenchement manuel est possible au moyen d'une installation de positionnement (15) fonctionnant en continu ou de façon incrémentale, dans un autre mode de fonctionnement, **caractérisé en ce que**, dans cet autre mode de fonctionnement un champ de fonctionnement (1) peut être influencé par l'enclenchement manuel mentionné ci-dessus, au moyen de modifications continues ou incrémentales ou décrémentales de paramètres indépendants ou d'une combinaison d'au moins deux paramètres de fonctionnement, dans lequel les paramètres de fonctionnement sont constitués de la vitesse de rotation du moteur (nM) de la démultiplication (Ü) et de la vitesse de l'arbre entraîné (n_{AB}).

2. Dispositif selon la revendication 1, **caractérisé en ce que** les paramètres de fonctionnement qui influencent le champ de fonctionnement (1) sont constitués de la combinaison de la vitesse de rotation du moteur (nM) et de la démultiplication (Ü).

3. Dispositif selon la revendication 1, **caractérisé en ce que** les paramètres de fonctionnement sont constitués de la combinaison de la vitesse de rotation du moteur (nM), de la démultiplication (Ü) et de la vitesse de l'arbre entraîné (n_{AB}).

4. Dispositif selon les revendications 1 à 3, **caractérisé en ce que** la modification des paramètres de fonctionnement s'effectue de façon continue ou incrémentale analogique ou en fonction du temps, selon une fonction de transmission.

5. Dispositif selon la revendication 1, **caractérisé en ce que** le basculement de l'installation de positionnement (15) dans le deuxième passage de vitesses (14) délivre des signaux analogiques ou numériques qui sont transmis à l'appareil de commande électronique (12).

6. Dispositif selon la revendication 5, **caractérisé en ce que** les signaux analogiques et/ou numériques sont traités et transformés par l'appareil de commande électronique (12), en un signal de sortie qui prend en compte au moins les paramètres de fonctionnement constitués de la vitesse de rotation du moteur (nM) et de la démultiplication (Ü).

7. Dispositif selon les revendications 1 à 3, **caractérisé en ce que** lors d'un enclenchement manuel, un point de travail quelconque du champ de fonctionnement (1) complet peut être atteint en continu ou par incréments.

8. Dispositif selon la revendication 1, **caractérisé en ce** qu'une vitesse de rotation constante (n_{AB}).de l'arbre de sortie de la boîte peut en outre être modifiée manuellement en continu ou par incréments, pour une vitesse de rotation du moteur variable (nM).

9. Dispositif selon la revendication 1, **caractérisé en ce que**, en fonction du temps, respectivement pour un actionnement incrémental du nombre d'impulsions (Z), une relativement grande modification de la vitesse de rotation du moteur est engagée, tandis que la modification de la démultiplication est comparativement faible, tandis que la vitesse de rotation du moteur décroît, pour un actionnement prolongé, respectivement pour un accroissement du nombre des impulsions, et tandis que la modification de la démultiplication s'accroît avec une tendance fortement croissante.
